(19) **Europäisches Patentamt / European Patent Office / Office européen des brevets**

(11) **EP 3 653 370 B1**

(12) **EUROPEAN PATENT SPECIFICATION**

(45) Date of publication and mention
of the grant of the patent:
**04.08.2021 Bulletin 2021/31**

(51) Int Cl.:
**B29D 7/01** *(2006.01)*      **B29C 55/10** *(2006.01)*
**B32B 7/06** *(2019.01)*      **B32B 27/08** *(2006.01)*
**C08J 5/18** *(2006.01)*

(21) Application number: **20150792.8**

(22) Date of filing: **28.12.2016**

(54) **HEAT RELAXED ASSEMBLY AND METHOD FOR MAKING HEAT RELAXED ASSEMBLY**

WÄRMEENTSPANNTE ANORDNUNG UND VERFAHREN ZUR HERSTELLUNG EINER WÄRMEENTSPANNTEN ANORDNUNG

ASSEMBLAGE THERMIQUEMENT RELAXÉ ET PROCÉDÉ DE FABRICATION D'UN ASSEMBLAGE THERMIQUEMENT RELAXÉ

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **29.12.2015 US 201562272417 P**

(43) Date of publication of application:
**20.05.2020 Bulletin 2020/21**

(62) Document number(s) of the earlier application(s) in
accordance with Art. 76 EPC:
**16834222.8 / 3 397 462**

(73) Proprietor: **3M Innovative Properties Company**
St. Paul, MN 55133-3427 (US)

(72) Inventors:
• **PURCELL, John P.**
Saint Paul, MN 55133-3427 (US)

• **SVACHA, James B.**
Saint Paul, MN 55133-3427 (US)
• **JOHNSON, Stephen A.**
Saint Paul, MN 55133-3427 (US)
• **LINDQUIST, Timothy J.**
Saint Paul, MN 55133-3427 (US)
• **TIEFENBRUCK, Grant F.**
Saint Paul, MN 55133-3427 (US)
• **WOLD, Chad R.**
Saint Paul, MN 55133-3427 (US)

(74) Representative: **Vossius & Partner
Patentanwälte Rechtsanwälte mbB**
**Siebertstrasse 3**
**81675 München (DE)**

(56) References cited:
EP-A1- 0 012 405      KR-A- 20080 087 755
US-A- 5 753 377      US-A1- 2002 065 346
US-A1- 2014 065 397      US-A1- 2015 183 178

**Description**

**Field**

The present invention relates to oriented polyester films which are dimensionally stable (i.e., they exhibit low shrinkage when subjected to elevated temperatures) and methods for making such films.

**Background**

Polyester films are typically oriented to impart desired characteristics to the films (e.g., tendency to undergo thermally induced shrinkage, increase tensile strength, increase impact strength, etc.). Orientation is typically carried out through a heating and stretching regime. Films may be oriented in a single axial dimension (i.e., uni-axial orientation) such as either transverse direction or machine direction, or in two, typically perpendicular, axial dimensions (i.e., bi-axial orientation) such as in both the transverse direction and the machine direction.

Oriented films typically exhibit a tendency to shrink when subjected to substantial warming. It is known to treat oriented films with heat relaxation (i.e., heating to a temperature above the intended use temperature) to reduce the remaining latent shrink tendency for applications where a tendency to undergo thermally induced shrinkage is not wanted. Illustrative examples are disclosed in US Patent Nos. 3,632,726 (Knox et al.), 4,160,799 (Locy et al.), and 4,275,107 (Bartkus et al.) which disclose apparatus and processes for making dimensionally stable, flat plastic films wherein a web of film is heated to selectively shrink it while the web is supported by air impingement during heat relaxation. Further examples are disclosed in US 2015/183178 A1 and US 2014/065397 A1.

In many applications, relatively thin polyester films are desired. However, heat relaxing such films is commonly known to lead to buckling of the film in cross web direction, impairing desired flat character of the films.

The need exists for thin caliper (e.g., about 127 microns (5 mils) or less, preferably 3 mil or less) polyester films that are highly flat and dimensionally stable (i.e., they exhibit low shrinkage when subjected to elevated temperatures) and methods for making such films.

**Summary**

The present invention provides polyester films which are dimensionally stable (i.e., they exhibit low shrinkage at elevated temperature). The invention also provides methods for making such films. The novel method of the invention can be used to produce polyester films exhibiting heretofore unattained and surprising combinations of low thickness, dimensional stability at high temperature, and high flatness.

The polyester films of the invention can exhibit relatively low thickness coupled with very low shrinkage and high flatness when exposed to high temperature. Films of the invention are about 127 microns (5 mils) or even thinner, while exhibiting less than 1 % shrinkage at elevated temperatures (e.g., 150°C) in both machine direction (i.e., parallel to the longitudinal axis of the web) and transverse or cross direction (i.e., perpendicular to the longitudinal axis of the web). The invention provides such polyester films as single films and in assemblies comprising a plurality of such films from which single films may be separated.

Briefly summarizing, the method of the invention comprises assembling polyester films in multilayer stacks referred to herein as treatment assemblies, then bi-axially orienting, heat setting, and heat relaxing the films in unison. After heat relaxation, individual films (which offer heretofore unattained combination of low thickness, high temperature dimensional stability, and high flatness) may be separated from the treatment assembly and used in desired applications.

**Brief Description of Drawing**

The invention is further explained with reference to the drawing wherein:

Fig. 1 is a block diagram of an illustrative method of the invention;
Fig. 2 is a perspective view of a portion of an illustrative embodiment of a treatment assembly of the invention;
Fig. 3 is a cross sectional view of another illustrative embodiment of a treatment assembly of the invention; and
Fig. 4 is a cross sectional schematic view of another illustrative embodiment of a treatment assembly engaged with a portion of the apparatus in which it is subjected to cross direction tension.

These figures are not to scale and are intended to be merely illustrative and not limiting. The following reference numbers are used in the figures.

| Reference Number | Feature |
|---|---|
| 10, 30, 40 | Treatment assembly |
| 11, 34, 38 | Stack of layer packets |
| 12a, 12b, 12c, 12d | Layer packets |
| 14, 44b, 46b | Polyester film |
| 16 | First major surface of polyester film |
| 18 | Second major surface of polyester film |
| 20, 44a, 46a | Release layer |
| 22, 31 | First major surface of carrier |
| 24 | Second major surface of release layer |
| 26, 32, 42 | Carrier |
| 31 | Side of carrier |
| 33 | Second major surface of carrier |
| 34 | Stack of layer packets |
| 36a, 36b | Layer packets |
| 38 | Stack of layer packets |
| 40a, 40b | Layer packets |
| 48, 50 | Edge clip |
| 100 | Providing treatment assembly |
| 200 | Bi-axial orientation |
| 300 | Heat setting |
| 400 | Heat relaxation |
| 500 | Film separation |

### Key and Glossary

For the following defined terms, these definitions shall be applied, unless a different definition is given in the claims or elsewhere in this specification.

The term "polymer" will be understood to include polymers, copolymers (e.g., polymers formed using two or more different monomers), oligomers and combinations thereof, as well as polymers, oligomers, or copolymers that can be formed in a miscible blend by, for example, coextrusion or reaction, including transesterification. Both block and random copolymers are included, unless indicated otherwise.

Unless otherwise indicated, all numbers expressing quantities of ingredients, properties such as molecular weight, reaction conditions, and so forth used in the specification and claims are to be understood as being modified in all instances by the term "about". Accordingly, unless indicated to the contrary, the numerical parameters set forth in the foregoing specification and attached claims are approximations that can vary depending upon the desired properties sought to be obtained by those skilled in the art utilizing the teachings of the present invention. At the very least, and not as an attempt to limit the application of the doctrine of equivalents to the scope of the claims, each numerical parameter should at least be construed in light of the number of reported significant digits and by applying ordinary rounding techniques. Notwithstanding that the numerical ranges and parameters setting forth the broad scope of the invention are approximations, the numerical values set forth in the specific examples are reported as precisely as possible. Any numerical value, however, inherently contains certain errors necessarily resulting from the standard deviations found in their respective testing measurements.

The recitation of numerical ranges by endpoints includes all numbers subsumed within that range (e.g., 1 to 5 includes 1, 1.5, 2, 2.75, 3, 3.80, 4, and 5). As used in this specification and the appended claims, the singular forms "a", "an", and "the" include plural referents unless the content clearly dictates otherwise. As used in this specification and the appended claims, the term "or" is generally employed in its sense including "and/or" unless the content clearly dictates otherwise.

## Detailed Description of Illustrative Embodiments

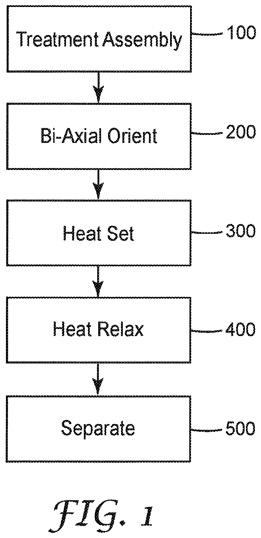

Fig. 1 is a schematic diagram of an illustrative embodiment of the method of the invention, the method comprising the steps of:

(a) providing 100 a treatment assembly comprising two or more polyester films;
(b) bi-axially orienting 200 the treatment assembly; then
(c) heat setting 300 the treatment assembly; and then
(d) heat relaxing 400 the treatment assembly; and
(e) optionally separating 500 individual polyester layers from the treatment assembly.

The method of the invention entails sequential treatment of the polyester films at a number of different temperature and dimensional tension or stress conditions. The temperature conditions are referred to herein as follows:

| $T_g$ | Glass transition temperature of the polyester in the polyester film. |
|---|---|
| $T_{Orient}$ | Orientation Temperature is the temperature of the polyester film during the bi-axial orientation. |
| $T_{Use}$ | Use Temperature is the temperature at which the resultant polyester film could be used in intended application. |
| $T_{Stable}$ | Stable Temperature is the highest temperature at which the resultant polyester film is dimensionally stable. |
| $T_{Relax}$ | Relaxation Temperature is the temperature of the polyester film during heat relaxation. |
| $T_{Set}$ | Set Temperature is the temperature of the polyester film during heat setting. |
| $T_m$ | Melting Temperature is the temperature at which the polyester in the polyester film will melt. |

Relative to one another, the subject temperatures the method of the invention such as is shown in Fig. 1 are as follows:
$$T_g < T_{Orient} < T_{Use} \leq T_{Stable} < T_{Relax} < T_{Set} < T_m.$$
It will be understood that these temperatures as referred to here are the temperatures to which the polyester layers are brought to during the subject processing operation and may be specific temperatures or ranges of temperatures having the indicated relationship. The principles which determine appropriate and preferred relationships between these temperatures are the same as which inform selection of operating temperatures for conventional orientation and dimensional stabilization of webs of single layers of polyester film.

As will be understood, the subject temperatures used in the method of the invention will be determined in part by the nature of the polyester film used, the maximum temperature (i.e., $T_{Use}$) of the intended application in which the polyester film is to be used and the minimum temperature (i.e., $T_{Stable}$) at which dimensional stability (i.e., low shrinkage) is lost as the polyester film begins to exhibit thermally induced shrinkage. Typically, the temperature ($T_{Use}$) of intended application and use will range from about 85°C up to about 200°C. If dimensional stability is desired, a polyester film should be dimensionally stable at temperatures at least equal to the use temperature (i.e., have a $T_{Stable} = T_{Use}$). Often, it is preferred that the polyester film is dimensionally stable at temperatures somewhat above the use temperature, (i.e., have a $T_{Stable} > T_{Use}$). In typical embodiments, $T_{Orient}$ is from 1°C to 100°C lower than $T_{Use}$.

Preferably, the method is carried out such that the temperature of the polyester film during heat relaxation (i.e., $T_{Relax}$) is from about 25 to about 35°C more than the intended use temperature ($T_{Use}$). As will be understood, if the temperature used during heat relaxation is too close to the actual temperature at which the resultant film is used, the film may fail to exhibit desired dimensional stability during use. Preferably the temperature of the polyester film during relaxation ($T_{Relax}$) is from about 40°C to about 100°C lower than the temperature of the polyester film during heat setting ($T_{Set}$).

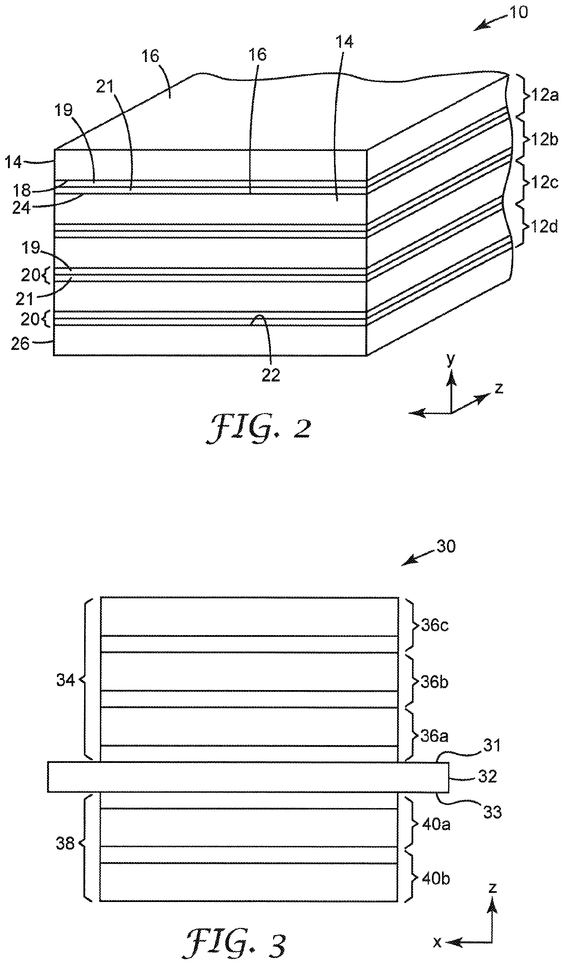

A portion of an illustrative embodiment of a treatment assembly of the invention is shown in Fig. 2 wherein treatment assembly 10 which comprises stack 11 of separable layer packets 12a-12d. Each layer packet comprises polyester film 14 having first and second major surfaces 16, 18 and release layer 20 having first and second major surfaces 22, 24 with first major surface 22 of release layer 20 being releasably attached to second major surface 18 of polyester film 14.

In this description the invention is described herein with reference to three mutually perpendicular dimensional axes of *x, y*, and *z*; the axes are shown in each Fig. to give orientation. As shown in Fig. 2 the x-axis refers to the axis of the treatment assembly from side-to-side. This dimension is sometimes referred to in the art as width, cross direction (i.e., CD), or transverse direction (i.e., TD)). The *y*-axis refers to the longitudinal axis of the treatment assembly (i.e., sometimes referred to as length or machine direction (i.e., MD)). The z-axis refers to the dimension of the treatment assembly through the plurality of layer packets (sometimes referred to as the height of the stack). When wound into roll form, the web is curved in its *y*-axis.

In the embodiment shown in Fig. 2, treatment assembly 10 also comprises optional carrier 26. In some embodiments, no carrier is used and the treatment assembly consists essentially of the stack of a plurality of layer packets.

Fig. 3 is a perspective view of another embodiment of a treatment assembly of the invention wherein treatment assembly 30 comprises optional carrier 32 having opposing sides 31, 33 with first stack 34 of layer packets 36a, 36b, each layer packet comprises releasably attached a polyester film having first and second major surfaces and a release layer having first and second major surfaces with the first major surface of the release layer being releasably attached to second major surface of the polyester film on side 31. In addition, treatment assembly 30 comprises second stack 38 on second side 33 of carrier 32.

Providing a Treatment Assembly

In the method of the present invention, polyester films are handled and treated (i.e., oriented, heat set, and heat relaxed) in bundles referred to herein as treatment assemblies from which single polyester films may be separated. It has been found that manipulation of thin polyester films in this manner enables fabrication of oriented, dimensionally stable films of thinner thickness than was previously possible. Treatment assemblies used herein are typically in a continuous web format for the processing efficiencies and capabilities that can be achieved with that approach. The term "web" is used here to describe thin materials which are manufactured or processed in continuous, flexible strip form.

A treatment assembly comprises a plurality of layer packets stacked upon one another. Each layer packet comprises a polyester film having first and second major surfaces and a release layer having first and second major surfaces with the first major surface of the release layer being separably bonded to the second major surface of the polyester film. The layer packets are separably bonded in a stack such that the second major surface of the release layer of an overlying layer packet is separably bonded to the first major surface of the polyester film of an underlying layer packet.

Typically, it is preferred that within a treatment assembly the polyester films in respective layer packets within a stack are of similar width and length size (i.e., they have the same dimensions in the x-axis and *y*-axis) and stacked uniformly one over another (i.e., are aligned in the z-axis). The polyester films within a single treatment assembly may be of substantially similar thickness or of differing thickness.

The polyester films within a treatment assembly may be the same composition or different. It is typically preferred that the various polyester films within a treatment assembly have similar $T_g$. As will be understood, bi-axial orientation, heat setting, and heat relaxation will need to be carried out at temperature ranges sufficient high for the polyester layer having the higher $T_g$.

Polyester Films

Each layer packet comprises a semi-crystalline polyester film which is capable of being oriented, heat set, and heat relaxed. The polyester is configured into film form having first and second major surfaces by known technique, such as casting, extrusion, and the like.

Selection of the polyester is dependent in part upon the intended end use application and properties desired therefor. The polyester constituting the polyester film is a polymer obtained by a condensation polymerization of a diol and a dicarboxylic acid. The diol is typified by ethylene glycol, trimethylene glycol, tetramethylene glycol, cyclohexanedimethanol, combinations thereof. The dicarboxylic acid is typified by terephthalic acid, isophthalic acid, phthalic acid, naphthalene dicarboxylic acid, adipic acid, sebacic acid, and combinations thereof. Specifically, polymethylene terephthalate, polyethylene terephthalate, polytetramethylene terephthalate, polyethylene-p-oxybenzoate, poly-1,4-cyclohexanedimethalene tere-phthalate, and polyethylene-2,6-naphthalate are given by way of example as such polyesters. These polyesters may be either homopolymers or copolymers. Copolymer structural units may for example comprise diol units, such as diethylene glycol, neopenthal glycol, and polyalkaline glycol, or dicarboxylic acid units, such as adipic acid, sebacic acid, phthalic acid, isophthalic acid, and 2,6-naphthalene dicarboxylic acid.

From considerations such as mechanical strength, heat resistance, chemical resistance, and durability, polyethylene terephthalate (sometimes referred to as "PET") and polyethylene-2,6-naphthalate (sometimes referred to as "PEN") are often preferred for many applications. Among these two, polyethylene terephthalate is often the more preferable due to its lower cost.

The polyester may be used alone in the polyester layer, or as a copolymer with another polyester, or in a mixture of two or more kinds of polyesters. It is typically preferably used alone, from the view point of mechanical properties and heat-resistance. If present, other ingredient(s) in a copolymer or a mixture are preferably no more than 10 mol % and, more preferably no more than 5 mol % based on the number of moles for the repetitive structural units. The copolymerization ingredient may include a diol ingredient such as diethylene glycol, neopentyl glycol, and polyalkylene glycol, and/or a dicarboxylic acid ingredient such as adipic acid, sebacic acid, phthalic acid, isophthalic acid, terephthalic acid, and 5-sodium sulfoisophthalic acid.

Typically, the polyester film comprises one or more polyesters having a $T_g$ and a $T_m$ wherein the $T_g$ is below the desired $T_{Use}$, and the $T_m$ is sufficiently high that axial orientation at $T_{Orient}$, heat setting at $T_{Set}$, and heat relaxation at $T_{Relax}$ as described herein can be carried out wherein:

$$T_{Orient} < T_{Relax} < T_{Set} < T_m.$$

In the embodiment shown in Fig. 2, the treatment assembly comprises four separable layer packets 12a, 12b, 12c, 12d. In typical embodiments, the treatment assembly comprises from 2 to 20 separable layer packets. Treatment assemblies comprising more layer packets may be used in accordance with the invention; as will be understood, increasing the number of layer packets in a treatment assembly tends to increase the mechanical forces necessary to orient, transport, and handle the treatment assembly as well as correspondingly impact the time and heating intensity demands necessary to raise the temperature of the treatment assembly through the progressive steps of the method of the invention.

Typically it is preferred that each film is flat and of substantially uniform thickness (i.e., substantially uniform dimension in its z-axis throughout its entire width, that is from side-to-side (i.e., the *x*-axis), and length, that is end-to-end (i.e., the *y*-axis)).

As known in the art, the polyester films will thin substantially in accordance with the stretch ratios applied during bi-axial orientation. Accordingly, the initial thickness of the polyester films when the treatment assembly is formed is selected in large part upon the desired thickness of the resultant bi-axially oriented, heat set, heat relaxed polyester films. Depending upon the stretch ratios used, the initial thickness is often from about 10 to about 20 times that of the final thickness.

Advantages of the present invention include that by processing polyester films within a treatment assembly as described herein, resultant polyester films exhibiting surprising dimensional stability at elevated temperatures may be produced at heretofore unavailable surprisingly thin thicknesses.

Release Layers

The release layers should provide desired adhesion to adjacent polyester layers in the treatment assembly throughout the steps of the method of the invention. In some embodiments, the release layers provide a bond strength to the polyester films of from about 2 to about 40 g/cm-width (5 to 100 g/in-width).

The release layer should be compatible with the polyester (i.e., not react undesirably therewith, stain, or degrade the polyester), throughout the process conditions (i.e., elevated temperatures, stretching, winding, etc.). The release layer should be able capable of stretching, preferably yielding smoothly during axial orientation, substantially without any tendency to elastically recover during heat setting and heat relaxation.

The release layer should be such that after use in the method of the invention, in particular after orientation (which will impart some thinning or necking down of the thickness of the release layer), heat setting, and heat relaxation, the release layer exhibits sufficient body to permit it to be effectively separated from the polyester layer to permit the polyester layer to be used as desired. Preferably the release layer and polyester film are compatible such upon removal of the release layer from the face of the polyester film no residue is left on the polyester film and no undesired degradation to the surface of the polyester film is imparted.

Typically, the desired average thickness of the release layers after orientation of the polyester films is from about 2 to about 25 microns (0.1 to 1.0 mil), preferably from about 7.5 to about 18 microns (0.3 to 0.7 mil). Depending upon the stretch ratios used, the initial thickness is often from about 10 to about 20 times that of the final thickness. Typically, each release layer has substantially uniform thickness from side-to-side (i.e., the x-axis) and end-to-end (i.e., the *y*-axis).

Suitable release layers may be readily selected by those skilled in the art. Illustrative examples include polymeric materials selected from the group consisting of polyolefins (e.g., polymethylene, polyethylene, polypropylene, copolymers of polyethylene and polypropylene, etc.), styrene/rubber block copolymers (e.g., block copolymers of styrene and polystyrene with polybutadiene, polyisoprene, or hydrogenated equivalents), ethylene alpha olefin copolymers, olefin block copolymers, and blends of one or more such materials. The layers disclosed in US Patent Appln. Publn. No. 2014/0065397 (Johnson et al.) as "interlayer (C)" are suitable for use as release layers in treatment assemblies of the present invention.

Release layers may be monolayer or multilayer. For instance, release layers may be fabricated in bi-layer form with differing composition so as to improve desired properties. For instance, in some embodiments one of the layers within a multilayer release layer is formulated to impart increased body and strength to the release layer such that separation from the polyester layers is more easily accomplished. In some embodiments, one of the layers within a bi-layer release layer is formulated to impart relatively higher adhesion to adjacent polyester film in the treatment assembly than the level of adhesion provided by the other layer within the bi-layer release layer. For instance, referring to Fig. 2, release layers 20 are of a bi-layer configuration, comprising upper layer 19 releasably bonded to second major surface 18 of overlying polyester layer 14 and lower layer 21 releasably bonded to first major surface 16 of underlying polyester layer 14.

Assembly

Alternating selected polyester films and release layers are arranged and configured into a stack to form a treatment assembly. Suitable methods and techniques for forming the constituent films and layers, and arranging and configuring them into desired multilayer stacks will be well known to those skilled in the art. Illustrative examples include co-extrusion, lamination of previously formed films and layers (e.g., cast, extruded layers, etc.). Co-extrusion methods will typically be preferred, particularly for embodiments of the invention utilizing relatively thin polyester films and release layers.

The polyester films in a treatment assembly may be the same or different in composition. The polyester films in a treatment assembly may have the same or different in thickness (i.e., z-axis dimension).

The release layers in a treatment assembly may be the same or different in composition. The release layers in a treatment assembly may have the same or different in thickness (i.e., z-axis dimension).

It is typically preferred that the stack be at least about 50 microns (2 mils) thick (i.e., z-axis dimension). At thinner dimensions, there is greater tendency for the polyester layers to undergo corrugation during heat relaxation. Thicker treatment assemblies may be used in accordance with the invention, though as will be understood, use of thicker treatment assemblies tends to increase the mechanical forces necessary to orient, transport, and handle the treatment assembly as well as correspondingly impact the time and heating intensity demands necessary to raise the temperature of the treatment assembly through the progressive steps of the method of the invention. Thus, while there is essentially no technical upper limit to the number of layer packets, or thickness of polyester layers therein, from which a treatment assembly may be fabricated, there may be practical limit imposed by the processing demands necessary to orient, transport, and handle the treatment assembly in accordance with the method of the present invention.

In some embodiments, as shown in Fig. 2, treatment assembly 10 further comprises optional carrier 26 on which stack 11 is supported. The carrier facilitates handling of the treatment assembly as the method of the invention is carried out.

Axial Orientation

As shown in Fig. 1, the treatment assembly (including its constituent polyester films) is bi-axially oriented in station 200.

Well known processes and apparatuses for bi-axially orienting polyester films may be used in the method of the invention. Typically bi-axial orientation is carried out either simultaneously (i.e., stretching in both x-axis and y-axis at the same time) or sequentially (i.e., stretching first in one of the x-axis or y-axis and then stretching in the other axis). Illustrative examples of apparatus that may be used for treating treatment assemblies of the invention to carry out desired orienting, heat setting, and heat relaxing of the constituent polyester layers are disclosed in US Patent Nos. 2,779,684 (Alles), 2,823,421 (Scarlett), 4,261,944 (Hufnagel et al.), and 5,885,501. While conventionally single polyester films are oriented, heat set, and heat relaxed, in the present invention the apparatus used must be capable of handling treatment assemblies as described herein which comprise two or more polyester layers as well as the release layers and optional carrier, if used.

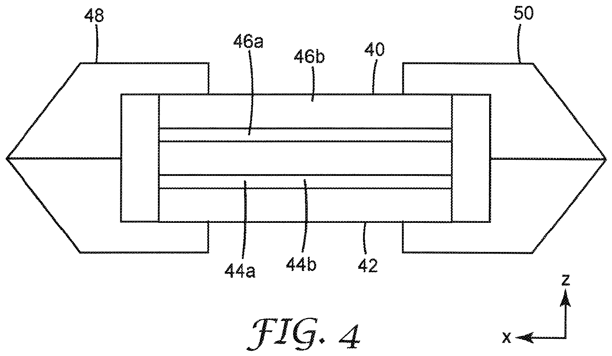

An illustrative configuration is shown in Fig. 4 where treatment assembly 40 comprising carrier 42 and a first layer packet of release layer 44a and polyester 44b and a second layer packet of release layer 46a and polyester 46b held by clips 48, 50. During methods employing simultaneous orientation, assembly 40 will be engaged with a series of clips 48, 50 to impart both transverse and machine direction tension and stretching. During methods employing sequential orientation, assembly 40 will be engaged with a series of clips 48, 50 during the transverse orientation phase whereas during the machine direction orientation phase typically clips 48, 50 are release and machine direction tension and stretching is imparted by rollers.

Bi-axially orienting the polyester films is carried out by heating the treatment assembly such that the polyester films reach a temperature of $T_{Orient}$ wherein $T_{Orient}$ is above the $T_g$ of the polyester film, and biaxially stretching the treatment assembly while the polyester layers are at a temperature of at least $T_{Orient}$. $T_{Orient}$ is typically at least 5°C or more higher than $T_g$ to avoid web breaks and obtain smoother, more uniform stretching throughout the polyester layers. Typically, $T_{Orient}$ is not more than 10°C higher than $T_g$.

Although the force required to stretch the polyester layers tends to decline at relatively higher temperatures, it is typically preferred to carry out axial orientation under temperatures that are as low as possible. Even though orientation under such conditions requires more force, the polyester film achieves higher crystallinity and stress hardening during orientation.

If bi-axial orienting is carried out sequentially, the film may be heated so as to be at a first orientation temperature (i.e., $T_{Orient1}$) during the orientation in the first axial direction (e.g., one of the transverse or machine direction) and a second orientation temperature (i.e., $T_{Orient2}$) during the orientation in the second axial orientation (e.g., the other of the transverse or machine direction) wherein $T_{Orient1}$ and $T_{Orient2}$, which may be the same or different, are each above the $T_g$ of the film and below $T_{Set}$ used.

The stretch ratio will be determined in part by the intended end use application of the polyester film and desired properties. Typically, the stretch ratio will be about 3:1 to 5:1 in each of the transverse direction (i.e., $x$-axis) and the longitudinal axis (i.e., $y$-axis) though higher ratios may be used if desired.

The length of time necessary to carry out axial orientation will depend in part upon the temperature in the orienter, force capability of the orienter, and size and bulk of the treatment assembly. Treatment assemblies comprising more layer packets, or layer packets comprising thicker polyester films or thicker release layers, will tend to require longer or more intense heating to warm to the desired orientation temperature than will treatment assemblies comprising relatively fewer layer packets or layer packets comprising thinner polyester films and thinner release layers.

The treatment assembly in its form after bi-axial orientation but before heat setting is referred to herein as an "oriented assembly". After bi-axial orientation, the oriented assembly, comprising a plurality of layer packets in which the polyester films are bi-axially oriented (and the release layers are now stretched), is then passed to the step of heat setting.

Heat Setting

Heat setting is typically carried out directly after bi-axial orientation and is preferably done in-line.

Heat setting the oriented polyester films is carried out by heating the oriented assembly (e.g., in an oven) such that the polyester films reach a temperature $T_{Set}$ wherein $T_{Set}$ is (1) above $T_{Orient}$ in the case of simultaneous bi-axial orientation, or above both $T_{Orient1}$ and $T_{Orient2}$ in the case of sequential bi-axial orientation, and (2) below $T_m$ (e.g., typically preferably from about 20°C to about 60°C below) while maintaining the desired dimensions (i.e., the oriented assembly is held in lengthwise and crossweb tension such as is shown in Fig. 4 so as to maintain its $x$-axis and $y$-axis dimensions) so as to raise the crystallinity of the polyester component while resisting change in dimension in the $x$-axis and $y$-axis.

The length of time necessary to carry out heat setting will depend in part upon the oven temperature, the size and bulk of the treatment assembly. Treatment assemblies comprising more layer packets, or layer packets comprising thicker polyester films or thicker release layers, will tend to require longer or more intense heating to warm to the desired temperature (i.e., $T_{Set}$) than will treatment assemblies comprising relatively fewer layer packets or layer packets comprising thinner polyester films or thinner release layers. Typically it is preferred that the subject polyester films have a residence time of at least 5 seconds or more after achieving the desired temperature ($T_{Set}$).

The treatment assembly in its form after heat setting but before heat relaxation is sometimes referred to herein as a "heat set assembly". After heat setting, the heat set assembly, comprising a plurality of now bi-axially oriented, heat set polyester films, is then passed to the step of heat relaxing.

Heat Relaxation

Heat relaxing may be carried out directly after heat setting (e.g., in an in-line manner) or the heat set assembly maybe stored and then heat relaxed at another time, another location, or both as desired.

Heat relaxing the treatment assembly is carried out by heating the heat set assembly such that the polyester films reach a temperature $T_{Relax}$ wherein $T_{Relax}$ is below $T_{Set}$ and above $T_{Orient}$ while being substantially unrestrained in the $x$ and $y$ axial dimensions. During heat relaxation, the treatment assembly is typically subjected to a machine direction tension of about 1.4 megapascals (200) psi or less, preferably about 0.7 megapascal (100 psi) or less, and more preferably about 0.3 megapascal (50 psi) or less. Typically the treatment assembly is unrestrained in the transverse direction during heat relaxation with the clips or other means used to apply transverse direction tension during orientation and heat setting having been released.

$T_{Relax}$ is typically from about 25 to about 35°C above the intended use temperature ($T_u$).

The length of time necessary to carry out heat relaxation step will depend in part upon the oven temperature, the size and bulk of the treatment assembly. Treatment assemblies comprising more layer packets, or layer packets comprising thicker polyester films or thicker release layers, will tend to require longer or more intense heating to warm to the desired temperature (i.e., $T_{Relax}$) than will treatment assemblies comprising relatively fewer layer packets or layer packets comprising thinner polyester films or thinner release layers.

Those skilled in the art will be able to select suitable apparatus for carrying out heat relaxation of the polyester layers in the treatment assembly. Illustrative examples include air floatation ovens, hot cans with air cushion apparatus, and the like. If desired, heat relaxation may be carried out with conventional hot cans in which the treatment assembly comes into direct contact with the heating device, though it is likely that such methods will result in scratching or deformation of at least the member of the treatment assembly which is in direct contact.

After relaxation has occurred (e.g., by holding the assembly at $T_{Relax}$ for a time (e.g., while it is substantially unrestrained), the treatment assembly is cooled and typically wound into roll form before further processing and use.

The treatment assembly, in its form after heat relaxation but before separation of individual polyester layers therefrom is sometimes referred to herein as a "heat relaxed assembly". After the relaxation step, the heat relaxed assembly, comprising a plurality of now biaxially oriented, heat set, heat relaxed polyester films and interleaved stretched release layers, is then passed on for further use, such as separation and use of individual dimensionally stable polyester layers in desired applications, shipment to another location, transfer to another party for use, etc.

Separation

The individual polyester layers may be separated from the heat relaxed assembly directly after cooling, or separation may be carried out at another time, another location, or both.

The constituent release layer and polyester film of the layer packets are selected such that, after orientation, heat setting, and heat relaxation, they are separable, that is they may be successively delaminated in continuous sheet form to yield single polyester films.

As desired, the heat relaxed assembly may be converted before separation of individual polyester layers therefrom, such as by (1) subdividing or slitting in the *y*-axis to form one or more narrower webs comprising a plurality of polyester films and release layers, or (2) cutting in the *x*-axis to form shorter one or more shorter webs or stacks comprising a plurality of polyester films and release layers, or (3) both subdividing and cutting in such manner.

Use of Resultant Product

Films of the invention exhibit surprising dimensional stability, particularly at heretofore unattainable low calipers. For instance, the method of the invention can be used to manufacture polyester films that exhibit shrinkage at 150°C, in both the transverse direction and the machine direction, of less than about 1 %, preferably less than about 0.5 %, and in some instances less than about 0.2 %. The invention provides polyester films exhibiting such high dimensional stability which in some embodiments have an average thickness of about 127 microns (5 mils) or less, in other embodiments an average thickness of about 76 microns (3 mils) or less, in other embodiments an average thickness of about 51 microns (2 mils) or less, in other embodiments an average thickness of about 25 microns (1 mil) or less, and in some embodiments an average thickness of even about 13 microns (0.5 mil) or less.

**Claims**

1. A heat relaxed assembly comprising a plurality of separable layer packets, each layer packet comprising a polyester film, the polyester film comprising one or more semicrystalline polyesters having a $T_g$ and a $T_m$, having first and second major surfaces and a release layer having first and second major surfaces, the first major surface of the release layer being attached to the second major surface of the polyester film, wherein the layer packets are arranged in a stack such that the second major surface of the release layer of an overlying layer packet is attached to the first major surface of the polyester film of an underlying layer packet; wherein the average thickness of the polyester film is about 127 microns (5 mils) or less and the polyester film exhibits shrinkage at 150°C of less than 1 % in any axial direction.

2. The heat relaxed assembly of claim 1,
   wherein the average thickness of the polyester film is about 76 microns (3 mils) or less: or wherein the average thickness of the polyester film is about 51 microns (2 mils) or less; or wherein the average thickness of the polyester film is about 25 microns (1 mil) or less; or wherein the average thickness of the polyester film is about 13 microns (0.5 mil) or less.

3. The heat relaxed assembly of claim 1, wherein the polyester film exhibits less than 0.5 % shrinkage in any axial direction when heated to a temperature of about 150°C, or wherein the polyester film exhibits less than 0.2 % shrinkage in any axial direction when heated to a temperature of about 150°C.

4. A method for making a heat relaxed assembly, said method comprising the steps of:

(a) providing a treatment assembly comprising a plurality of layer packets, each layer packet comprising a polyester film, the polyester film comprising one or more semicrystalline polyesters having a $T_g$ and a $T_m$, having first and second major surfaces and a release layer having first and second major surfaces, the first major surface of the release layer being attached to the second major surface of the polyester film, wherein the layer packets are arranged in a stack such that the second major surface of the release layer of an overlying layer packet is separably attached to the first major surface of the polyester film of an underlying layer packet;
(b) bi-axially orienting the polyester films by heating the treatment assembly such that the polyester films reach a temperature of at least $T_{Orient}$ wherein $T_{Orient}$ is above the $T_g$ of the polyester film and biaxially stretching the treatment assembly while the layer packets are at a temperature of at least $T_{Orient}$ to yield an oriented assembly; then
(c) heat setting the polyester films by heating the oriented treatment assembly to a temperature $T_{Set}$ wherein $T_{Set}$ is above $T_{Orient}$ and below $T_m$ while maintaining the orienting configuration and dimensions so as to raise the crystallinity of the polyester component to yield a heat set assembly; and then
(d) heat relaxing the heat set treatment assembly by heating to a temperature $T_{Relax}$ wherein $T_{Relax}$ is below $T_{Set}$ and above $T_{Orient}$ while being substantially unrestrained in the x and y axial dimensions to yield a heat relaxed assembly,

wherein the average thickness of each polyester film in each layer packet in the heat relaxed assembly is about 127 microns (5 mils) or less.

5. The method of claim 4, wherein the average thickness of each polyester film in each layer packet in the heat relaxed assembly
is about 76 microns (3 mils) or less; or
is about 51 microns (2 mils) or less; or
is about 25 microns (1 mil) or less; or
is about 13 microns (0.5 mil) or less; or
is from about 5 to about 75 microns (0.2 to 3.0 mil); or
is from about 7.5 to about 50 microns (0.3 to 2.0 mil).

6. The method of claim 4, wherein the treatment assembly comprises from 2 to 20 layer packets.

7. The method of claim 4, wherein the treatment assembly comprises a carrier.

8. The method of claim 4, wherein the polyester films comprise polymeric material obtained by a condensation polymerization of a diol and a dicarboxylic acid.

9. The method of claim 8 wherein the polyester films comprise one or more of the following materials: polymethylene terephthalate, polyethylene terephthalate, polytetramethylene terephthalate, polyethylene-p-oxybenzoate, poly-1,4-cyclohexanedimethalene terephthalate, and polyethylene-2,6-naphthalate, preferably comprise polyethylene-2,6-naphthalate or polyethylene terephthalate.

10. The method of claim 4, wherein the release layers comprise polymeric materials selected from the group consisting of polyolefins, styrene/rubber block copolymers, ethylene alpha olefin copolymers, olefin block copolymers, and blends of one or more such materials.

11. The method of claim 10, wherein bi-axially orienting the polyester films comprises the sequential orientation steps of:

(b1) orienting the polyester films in a first axial direction by heating the treatment assembly such that the polyester films reach a temperature of at least $T_{Orient1}$ wherein $T_{Orient1}$ is above the $T_g$ of the polyester film and then stretching the treatment assembly in the first axial direction while the layer packets are at a temperature of at least $T_{Orient1}$ and then
(b2) orienting the polyester films in a second axial direction by heating the treatment assembly such that the polyester films reach a temperature of at least $T_{Orient2}$ wherein $T_{Orient2}$ is above the $T_g$ of the polyester film and stretching the treatment assembly in the second axial direction while the layer packets are at least $T_{Orient2}$;

wherein $T_{Orient1}$ and $T_{Orient2}$ may be the same or different.

12. The method of claim 4, wherein orienting the polyester films in the first axial direction comprises stretching the treatment assembly by a ratio of about 3 to about 5 : 1 or more in the first axial direction, or
orienting the polyester films in the second axial direction comprises stretching the treatment assembly by a ratio of about 3 to about 5 : 1 or more in the second axial direction.

**Patentansprüche**

1. Eine wärmeentspannte Anordnung, umfassend eine Mehrzahl trennbarer Schichtpakete, wobei jedes Schichtpaket einen Polyesterfilm, wobei der Polyesterfilm einen oder mehrere semikristalline Polyester mit einer $T_g$ und einer $T_m$ umfasst, mit einer ersten und zweiten Hauptoberfläche und eine Trennschicht mit einer ersten und zweiten Hauptoberfläche umfasst, wobei die erste Hauptoberfläche der Trennschicht an der zweiten Hauptoberfläche des Polyesterfilms angebracht ist, wobei die Schichtpakete in einem Stapel derart angeordnet sind, dass die zweite Hauptoberfläche der Trennschicht eines darüber liegenden Schichtpakets an der ersten Hauptoberfläche des Polyesterfilms eines darunter liegenden Schichtpakets angebracht ist; wobei die durchschnittliche Dicke des Polyesterfilms etwa 127 Mikrometer (5 mil) oder weniger beträgt und der Polyesterfilm eine Schrumpfung bei 150 °C von weniger als 1 % in einer axialen Richtung aufweist.

2. Die wärmeentspannte Anordnung nach Anspruch 1,
wobei die durchschnittliche Dicke des Polyesterfilms etwa 76 Mikrometer (3 mil) oder weniger beträgt: oder
wobei die durchschnittliche Dicke des Polyesterfilms etwa 51 Mikrometer (2 mil) oder weniger beträgt; oder
wobei die durchschnittliche Dicke des Polyesterfilms etwa 25 Mikrometer (1 mil) oder weniger beträgt; oder
wobei die durchschnittliche Dicke des Polyesterfilms etwa 13 Mikrometer (0,5 mil) oder weniger beträgt.

3. Die wärmeentspannte Anordnung nach Anspruch 1, wobei der Polyesterfilm eine Schrumpfung von weniger als 0,5 % in einer axialen Richtung aufweist, wenn er auf eine Temperatur von etwa 150 °C erwärmt wird, oder wobei der Polyesterfilm eine Schrumpfung von weniger als 0,2 % in einer axialen Richtung aufweist, wenn er auf eine Temperatur von etwa 150 °C erwärmt wird.

4. Ein Verfahren zur Herstellung einer wärmeentspannten Anordnung, wobei das Verfahren die Schritte umfasst:

(a) Bereitstellen einer Behandlungsanordnung, umfassend eine Mehrzahl von Schichtpaketen, wobei jedes Schichtpaket einen Polyesterfilm, wobei der Polyesterfilm einen oder mehrere semikristalline Polyester mit einer $T_g$ und einer $T_m$ umfasst, mit einer ersten und zweiten Hauptoberfläche und eine Trennschicht mit einer ersten und zweiten Hauptoberfläche umfasst, wobei die erste Hauptoberfläche der Trennschicht an der zweiten Hauptoberfläche des Polyesterfilms angebracht ist, wobei die Schichtpakete in einem Stapel derart angeordnet sind, dass die zweite Hauptoberfläche der Trennschicht eines darüber liegenden Schichtpakets trennbar an der ersten Hauptoberfläche des Polyesterfilms eines darunter liegenden Schichtpakets angebracht ist;
(b) biaxiales Ausrichten der Polyesterfilme durch Erwärmen der Behandlungsanordnung derart, dass die Polyesterfilme eine Temperatur von mindestens $T_{Orient}$ erreichen, wobei $T_{Orient}$ über der $T_g$ des Polyesterfilms liegt, und biaxiales Strecken der Behandlungsanordnung, während die Schichtpakete eine Temperatur von mindestens $T_{Orient}$ haben, um eine ausgerichtete Anordnung zu ergeben; dann
(c) Wärmefixieren der Polyesterfilme durch Erwärmen der ausgerichteten Behandlungsanordnung auf eine Temperatur $T_{Set}$, wobei $T_{Set}$ über $T_{Orient}$ und unter $T_m$ liegt, während die Ausrichtungskonfiguration und Abmessungen beibehalten werden, um so die Kristallinität der Polyesterkomponente zu erhöhen, um eine wärmefixierte Anordnung zu ergeben; und anschließend
(d) Wärmeentspannen der wärmefixierten Behandlungsanordnung durch Erwärmen auf eine Temperatur $T_{Relax}$, wobei $T_{Relax}$ unter $T_{Set}$ und über $T_{Orient}$ liegt, während er in den axialen Dimensionen x und y im Wesentlichen uneingeschränkt ist, um eine wärmeentspannte Anordnung zu ergeben,
wobei die durchschnittliche Dicke jedes Polyesterfilms in jedem Schichtpaket in der wärmeentspannten Anordnung etwa 127 Mikrometer (5 mil) oder weniger beträgt.

5. Das Verfahren nach Anspruch 4, wobei die durchschnittliche Dicke jedes Polyesterfilms in jedem Schichtpaket in der wärmeentspannten Anordnung

etwa 76 Mikrometer (3 mil) oder weniger beträgt; oder
etwa 51 Mikrometer (2 mil) oder weniger beträgt; oder
etwa 25 Mikrometer (1 mil) oder weniger beträgt; oder
etwa 13 Mikrometer (0,5 mil) oder weniger beträgt; oder
etwa 5 bis etwa 75 Mikrometer (0,2 bis 3,0 mil) beträgt; oder
etwa 7,5 bis etwa 50 Mikrometer (0,3 bis 2,0 mil) beträgt.

6. Das Verfahren nach Anspruch 4, wobei die Behandlungsanordnung 2 bis 20 Schichtpakete umfasst.

7. Das Verfahren nach Anspruch 4, wobei die Behandlungsanordnung einen Träger umfasst.

8. Das Verfahren nach Anspruch 4, wobei die Polyesterfilme Polymermaterial umfassen, das durch eine Kondensationspolymerisation eines Diols und einer Dicarbonsäure erhalten wird.

9. Das Verfahren nach Anspruch 8, wobei die Polyesterfilme eines oder mehrere der folgenden Materialien umfassen: Polymethylenterephthalat, Polyethylenterephthalat, Polytetramethylenterephthalat, Polyethylen-p-oxybenzoat, Poly-1,4-cyclohexandimethalenterephthalat und Polyethylen-2,6-naphthalat, vorzugsweise Polyethylen-2,6-naphthalat oder Polyethylenterephthalat umfassen.

10. Das Verfahren nach Anspruch 4, wobei die Trennschichten Polymermaterialien umfassen, die ausgewählt sind aus der Gruppe bestehend aus Polyolefinen, Styrol/Kautschuk-Blockcopolymeren, Ethylen-alpha-Olefin-Copolymeren, Olefin-Blockcopolymeren und Mischungen eines oder mehrerer solcher Materialien.

11. Das Verfahren nach Anspruch 10, wobei biaxiales Ausrichten der Polyesterfilme folgende aufeinander folgende Ausrichtungsschritte umfasst:

(b1) Ausrichten der Polyesterfilme in einer ersten axialen Richtung durch Erwärmen der Behandlungsanordnung derart, dass die Polyesterfilme eine Temperatur von mindestens $T_{Orient1}$ erreichen, wobei $T_{Orient1}$ über der $T_g$ des Polyesterfilms liegt, und dann Strecken der Behandlungsanordnung in der ersten axialen Richtung, während die Schichtpakete eine Temperatur von mindestens $T_{Orient1}$ haben, und dann
(b2) Ausrichten der Polyesterfilme in einer zweiten axialen Richtung durch Erwärmen der Behandlungsanordnung derart, dass die Polyesterfilme eine Temperatur von mindestens $T_{Orient2}$ erreichen, wobei $T_{Orient2}$ über der $T_g$ des Polyesterfilms liegt, und Strecken der Behandlungsanordnung in der zweiten axialen Richtung, während die Schichtpakete mindestens $T_{Orient2}$ aufweisen;

wobei $T_{Orient1}$ und $T_{Orient2}$ gleich oder unterschiedlich sein können.

12. Das Verfahren nach Anspruch 4, wobei Ausrichten der Polyesterfilme in der ersten axialen Richtung Strecken der Behandlungsanordnung um ein Verhältnis von etwa 3 bis etwa 5 : 1 oder mehr in der ersten axialen Richtung umfasst, oder
wobei Ausrichten der Polyesterfilme in der zweiten axialen Richtung Strecken der Behandlungsanordnung um ein Verhältnis von etwa 3 bis etwa 5 : 1 oder mehr in der zweiten axialen Richtung umfasst.

## Revendications

1. Ensemble thermiquement relaxé comprenant une pluralité de paquets de couches séparables, chaque paquet de couches comprenant un film de polyester, le film de polyester comprenant un ou plusieurs polyesters semi-cristallins ayant une $T_g$ et une $T_f$, ayant des première et deuxième surfaces principales et une couche antiadhésive ayant des première et deuxième surfaces principales, la première surface principale de la couche antiadhésive étant fixée à la deuxième surface principale du film de polyester, dans lequel les paquets de couches sont agencés dans une pile de telle sorte que la deuxième surface principale de la couche antiadhésive d'un paquet de couches surjacent est fixée à la première surface principale du film de polyester d'un paquet de couches sous-jacent ; dans lequel l'épaisseur moyenne du film de polyester est d'environ 127 micromètres (5 mils) ou moins et le film de polyester présente un retrait à 150 °C inférieur à 1 % dans n'importe quelle direction axiale.

2. Ensemble thermiquement relaxé selon la revendication 1,
dans lequel l'épaisseur moyenne du film de polyester est d'environ 76 micromètres (3 mils) ou moins : ou

dans lequel l'épaisseur moyenne du film de polyester est d'environ 51 micromètres (2 mils) ou moins ; ou
dans lequel l'épaisseur moyenne du film de polyester est d'environ 25 micromètres (1 mil) ou moins ; ou
dans lequel l'épaisseur moyenne du film de polyester est d'environ 13 micromètres (0,5 mil) ou moins.

3. Ensemble thermiquement relaxé selon la revendication 1, dans lequel le film de polyester présente moins de 0,5 % de retrait dans n'importe quelle direction axiale lorsqu'il est chauffé à une température d'environ 150 °C, ou dans lequel le film de polyester présente moins de 0,2 % de retrait dans n'importe quelle direction axiale lorsqu'il est chauffé à une température d'environ 150 °C.

4. Procédé de fabrication d'un ensemble thermiquement relaxé, ledit procédé comprenant les étapes consistant à :

(a) fournir un ensemble de traitement comprenant une pluralité de paquets de couches, chaque paquet de couches comprenant un film de polyester, le film de polyester comprenant un ou plusieurs polyesters semi-cristallins ayant une $T_g$ et une $T_f$, ayant des première et deuxième surfaces principales et une couche antiadhésive ayant des première et deuxième surfaces principales, la première surface principale de la couche antiadhésive étant fixée à la deuxième surface principale du film de polyester, dans lequel les paquets de couches sont agencés dans une pile de telle sorte que la deuxième surface principale de la couche antiadhésive d'un paquet de couches surjacent est fixée de manière séparable à la première surface principale du film de polyester d'un paquet de couches sous-jacent ;
(b) orienter biaxialement les films de polyester en chauffant l'ensemble de traitement de telle sorte que les films de polyester atteignent une température d'au moins $T_{Orient}$ dans lequel $T_{Orient}$ est au-dessus de la $T_g$ du film de polyester et étirer biaxialement l'ensemble de traitement alors que les paquets de couches sont à une température d'au moins $T_{Orient}$ pour donner un ensemble orienté ; puis
(c) durcir thermiquement les films de polyester en chauffant l'ensemble de traitement orienté à une température $T_{Set}$ dans lequel $T_{Set}$ est au-dessus de $T_{Orient}$ et en dessous de $T_m$ tout en maintenant la configuration d'orientation et les dimensions de façon à augmenter la cristallinité du composant de polyester pour donner un ensemble thermodurci ; puis
(d) relaxer thermiquement l'ensemble de traitement thermodurci en chauffant à une température $T_{Relax}$ dans lequel $T_{Relax}$ est en dessous de $T_{Set}$ et au-dessus de $T_{Orient}$ tout en étant essentiellement non retenu dans les dimensions axiales x et y pour donner un ensemble thermiquement relaxé,

dans lequel l'épaisseur moyenne de chaque film de polyester dans chaque paquet de couches dans l'ensemble thermiquement relaxé est d'environ 127 micromètres (5 mils) ou moins.

5. Procédé selon la revendication 4, dans lequel l'épaisseur moyenne de chaque film de polyester dans chaque paquet de couches dans l'ensemble thermiquement relaxé
est d'environ 76 micromètres (3 mils) ou moins ; ou
est d'environ 51 micromètres (2 mils) ou moins ; ou
est d'environ 25 micromètres (1 mil) ou moins ; ou
est d'environ 13 micromètres (0,5 mil) ou moins ; ou
va d'environ 5 à environ 75 micromètres (0,2 à 3,0 mil) ; ou
va d'environ 7,5 à environ 50 micromètres (0,3 à 2,0 mil).

6. Procédé selon la revendication 4, dans lequel l'ensemble de traitement comprend de 2 à 20 paquets de couches.

7. Procédé selon la revendication 4, dans lequel l'ensemble de traitement comprend un support.

8. Procédé selon la revendication 4, dans lequel les films de polyester comprennent un matériau polymère obtenu par une polymérisation par condensation d'un diol et d'un acide dicarboxylique.

9. Procédé selon la revendication 8 dans lequel les films de polyester comprennent un ou plusieurs des matériaux suivants : téréphtalate de polyméthylène, téréphtalate de polyéthylène, téréphtalate de polytétraméthylène, polyéthylène-p-oxybenzoate, téréphtalate de poly-1,4-cyclohexanediméthalène, et polyéthylène-2,6-naphtalate, comprennent de préférence du polyéthylène-2,6-naphthalate ou du polyéthylène téréphtalate.

10. Procédé selon la revendication 4, dans lequel les couches antiadhésives comprennent des matériaux polymères choisis dans le groupe constitué de polyoléfines, copolymères séquencés styrène/caoutchouc, copolymères d'éthylène-alpha-oléfine, copolymères séquencés d'oléfine, et des mélanges d'un ou plusieurs matériaux tels.

**11.** Procédé selon la revendication 10, dans lequel l'orientation biaxiale des films de polyester comprend les étapes d'orientation séquentielle consistant à :

(b1) orienter les films de polyester dans une première direction axiale en chauffant l'ensemble de traitement de telle sorte que les films de polyester atteignent une température d'au moins $T_{Orient1}$ dans lequel $T_{Orient1}$ est au-dessus de la $T_g$ du film de polyester puis étirer l'ensemble de traitement dans la première direction axiale alors que les paquets de couches sont à une température d'au moins $T_{Orient1}$ puis
(b2) orienter les films de polyester dans une deuxième direction axiale en chauffant l'ensemble de traitement de telle sorte que les films de polyester atteignent une température d'au moins $T_{Orient2}$ dans lequel $T_{Orient2}$ est au-dessus de la $T_g$ du film de polyester et étirer l'ensemble de traitement dans la deuxième direction axiale alors que les paquets de couches sont à au moins $T_{Orient2}$ ;

dans lequel $T_{Orient1}$ et $T_{Orient2}$ peuvent être identiques ou différentes.

**12.** Procédé selon la revendication 4, dans lequel l'orientation des films de polyester dans la première direction axiale comprend l'étirement de l'ensemble de traitement d'un rapport d'environ 3 à environ 5 : 1 ou plus dans la première direction axiale, ou

l'orientation des films de polyester dans la deuxième direction axiale comprend l'étirement de l'ensemble de traitement d'un rapport d'environ 3 à environ 5 : 1 ou plus dans la deuxième direction axiale.

| Treatment Assembly | 100 |
| Bi-Axial Orient | 200 |
| Heat Set | 300 |
| Heat Relax | 400 |
| Separate | 500 |

$\mathcal{FIG.}$ 1

*FIG. 2*

*FIG. 3*

*FIG. 4*

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 3632726 A, Knox
- US 4160799 A, Locy
- US 4275107 A, Bartkus
- US 2015183178 A1
- US 2014065397 A1
- US 20140065397 A, Johnson
- US 2779684 A, Alles
- US 2823421 A, Scarlett
- US 4261944 A, Hufnagel
- US 5885501 A